# EUROPEAN PATENT APPLICATION

(11) **EP 4 667 661 A1**
(43) Date of publication of application: **24.12.2025**
(21) Application number: 25175976.7
(22) Date of filing: 13.05.2025
(51) Int. Cl.: E02B 17/02, E02D 27/42, E02B 17/00

(54) **AN OFFSHORE WIND TURBINE FOUNDATION AND A METHOD FOR INSTALLING AN OFFSHORE WIND TURBINE FOUNDATION**

(30) Priority: 21.05.2024 DK PA202470145
(71) Applicant: Rambøll Danmark A/S, 2300 Copenhagen S (DK)
(72) Inventor: JENSEN, Jacob Fisker, 2800 Kongens Lyngby (DK); DE PAULO JÚLIO, Pedro Carvalho, 2300 Copenhagen (DK); FISCHER, Tim Andreas, 47495 Rheinberg (DE)
(74) Representative: Patentgruppen A/S

(57) **Abstract**

Disclosed is an offshore wind turbine foundation (6) comprising, a connection interface (7) arranged at the top of the offshore wind turbine foundation (6), wherein the connection interface (7) comprises connection means (8) arranged for connecting a wind turbine tower (2) or a transition piece (9) to the offshore wind turbine foundation (6). The offshore wind turbine foundation (6) further comprises three or more ballast containers (10) arranged at the bottom of the offshore wind turbine foundation (6), wherein each of the three or more ballast containers (10) comprises a floor (11) and at least one sidewall (12) protruding in the direction of the connection interface (7) from the floor (11), so that a container opening (13) is formed at the top end of the at least one sidewall (12). The offshore wind turbine foundation (6) also comprises ballast material (16) arranged in each of the three or more ballast containers (10), and a lattice structure (14) interconnecting the three or more ballast containers (10) and the connection interface (7), wherein the three or more ballast containers (10) are arranged outside a horizontal outer perimeter of the lattice structure (14).

A method for installing an offshore wind turbine foundation (6) on a seabed (27) is also disclosed.

## Description

### Background of the invention

The invention relates to an offshore wind turbine foundation comprising a connection interface arranged at the top of the offshore wind turbine foundation, wherein the connection interface comprises connection means arranged for connecting a wind turbine tower or a transition piece to the offshore wind turbine foundation. The offshore wind turbine foundation further comprises three or more ballast containers arranged at the bottom of the offshore wind turbine foundation, wherein each of the three or more ballast containers comprises a floor and at least one sidewall protruding in the direction of the connection interface from the floor. The invention further relates to a method for installing an offshore wind turbine foundation on a seabed.

### Description of the Related Art

Large modern wind turbines usually comprise a rotor held by a nacelle, wherein the nacelle is placed at the top of a tower. Offshore the wind turbine is usually placed on top of a foundation substructure - such as a monopile, a jacket, tripod or other - so that the entire wind turbine is maintained above sea level substantially at all times. Often a transition piece is arranged between the tower and the foundation to form a structural transition between the tower and the foundation and to accommodate external platforms, boat landing etc. Monopile foundations are typically rammed into the seabed and lattice structure foundations such as jackets and tripods are often connected to the seabed by means of anchoring pole or rods, cast or rammed into the seabed to make the structure accept the loads exerted by wind, waves, current and other. However, sometimes seabed penetration is not possible or desirable - e.g., in case of the seabed being rock or if ramming, drilling or the use of explosives are not desirable or feasible. Thus, from the European patents EP 2 955 277 B1 and EP 2 933 381 B1 it is known to form a gravity-based foundation to be placed on top of the seabed by means of a lattice structure - a jacket or a tripod - placed on top of and connected to ballast tank which can be filled with water or sand to make the foundation very bottom heavy and thereby able to accept e.g. large overturning moments. Gravity-based foundations are desirable because they do not need significant seabed penetration, and the installation generates less noise, but the specific structural designs disclosed in EP 2 955 277 B1 and EP 2 933 381 B1 are not advantageous.

An object of the invention is therefore to provide for a more advantageous offshore wind turbine foundation technique.

### The invention

The invention provides for an offshore wind turbine foundation comprising, a connection interface arranged at the top of the offshore wind turbine foundation, wherein the connection interface comprises connection means arranged for connecting a wind turbine tower or a transition piece to the offshore wind turbine foundation. The offshore wind turbine foundation further comprises three or more ballast containers arranged at the bottom of the offshore wind turbine foundation, wherein each of the three or more ballast containers comprises a floor and at least one sidewall protruding in the direction of the connection interface from the floor, so that a container opening is formed at the top end of the at least one sidewall. The offshore wind turbine foundation also comprises ballast material arranged in each of the three or more ballast containers, and a lattice structure interconnecting the three or more ballast containers and the connection interface, wherein the three or more ballast containers are arranged outside a horizontal outer perimeter of the lattice structure.

Lattice structure foundations - such as jacket foundations or tripod foundations - are advantageous over e.g. monopile foundations in that a large stiffness can be achieved with less material and in that the total area being affected by waves and current is typically smaller. Furthermore, lattice structure foundations typically have a larger footprint than a monopile foundation - i.e., the horizontal outer perimeter of a lattice structure foundation at the seabed is typically bigger than the outer diameter of a monopile foundation. And the further the ballast is located horizontally from the centre of the foundation the less ballast is needed to enable the foundation to withstand the same overturning moment, i.e. the resisting moment against overturning increases. This is also one of the reasons that it is advantageous to arrange the ballast containers outside the horizontal outer perimeter of the lattice structure, in that the ballast hereby is located far from the foundation centre in a simple manner. Another reason is that by arranging the ballast containers outside the horizontal outer perimeter of the lattice structure the ballast container can be arranged to vertically overlap the lattice structure making it easier to form a strong and stiff connection between the lattice structure and the ballast container. Even further, arranging the ballast containers outside the horizontal outer perimeter of the lattice structure enables that the lattice structure may extend all the way to the seabed making it much easier to design the lattice structure. Furthermore, arranging the ballast containers outside the horizontal outer perimeter of the lattice structure enables that the ballast containers can be open at the top and thereby easily filled with ballast material that can be lowered vertically down into the ballast containers from the surface of the sea after the interconnected lattice structure and ballast containers have been correctly placed on the seabed. This furthermore enables the use of more dense ballast material - such as concrete blocks, High Density Concrete (HDC) blocks, steel reinforced concrete blocks, metal blocks, rocks or rock blocks or similar having a much higher density than e.g. water or sand.

In this context the term "connection means" should be understood as any kind of connector suited for connecting a wind turbine tower or a transition piece to an offshore wind turbine foundation. I.e., the term includes any kind of blind hole, through hole, threaded hole, welding, bolts, screws, rivets or similar or any combination thereof.

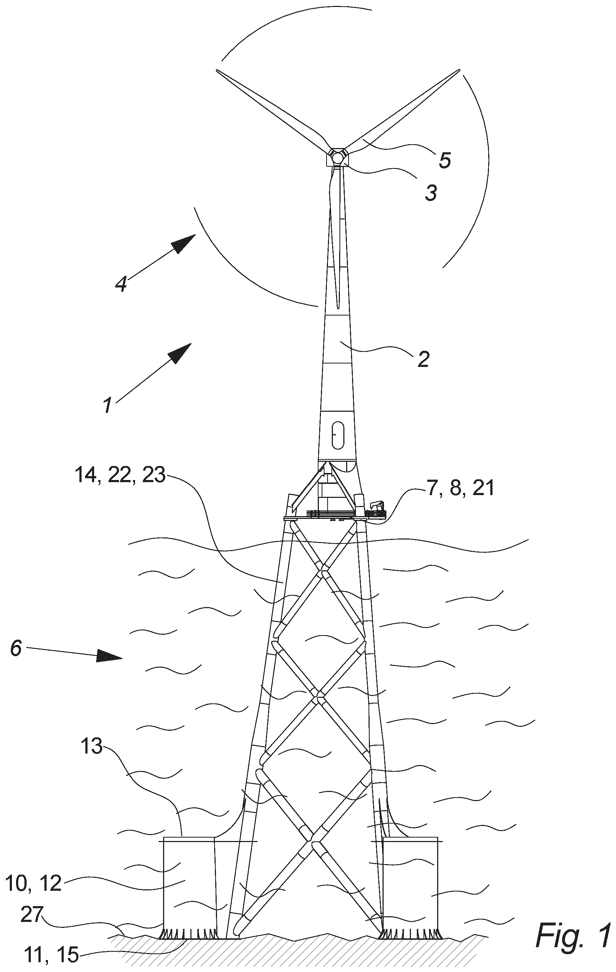

Furthermore, in this context the term "horizontal outer perimeter of the lattice structure" should be understood as the outer boundary or outer limit of the lattice structure at the seabed as seen in a horizontal plane - i.e., the ballast containers are located outside the outer physical extent of the lattice structure as seen in a horizontal plane - i.e., seen top down on an offshore wind turbine foundation being vertically erect with the ballast containers at the bottom and the connection interface at the top as shown in fig. 1. The largest horizontal extent of the structure at the seabed is usually also referred to as "footprint" in the field of technology of the invention.

It should also be noted that any reference to orientation throughout this document - such as horizontally, vertically, up, down, top, bottom, upper, lower, side etc. - refers to the normal orientation in an erected, substantially vertically extending offshore wind turbine foundation as it would be oriented during normal operation of an offshore wind turbine.

In an aspect of the invention, at least a part of the lattice structure is extending in between the three or more ballast containers.

Making at least part of the lattice structure extend in between the three or more ballast containers makes it easier to design a stiff and rigid structure in that the ballast containers hereby are better interconnected.

In an aspect of the invention, an underside of the floor forms the lowermost face of the offshore wind turbine foundation, so that the offshore wind turbine foundation is resting on the floor during normal use of the offshore wind turbine foundation.

The weight of the ballast is considerable in order to be efficient, and suspending the ballast above the seabed would therefor require substantial extra stiffening which in turn results in increasing the cost of the foundation. Furthermore, the lower the centre of gravity of the ballast is located the more efficient it is in relation to counter overturning moments, and it is therefore advantageous to make the underside of the floor form the lowermost face of the offshore wind turbine foundation.

In an aspect of the invention, the ballast material in each of the three or more ballast containers is formed as one or more coherent blocks substantially extending from the floor to the container opening.

Forming the ballast material as coherent blocks each substantially extending the entire inner height of the ballast containers is a simple and efficient way of increasing the density of the ballast material - thereby reducing the size and cost of the ballast containers - and simplifying the logistics of handling the ballast material. Furthermore, using coherent blocks which are lowered down into the ballast containers during installation makes it easy to decommission the foundation by simply lifting and removing the coherent blocks.

In an aspect of the invention, the ballast material is formed as one or more coherent blocks, wherein at least one of the one or more coherent blocks comprises a downwards extending protrusion.

It is advantageous if the downwards extending protrusion is embedded in the bottom part of the one or more coherent blocks in that the entire weight of the ballast block is resting on the downward extending protrusion so that it is ensured that the protrusion penetrates the underlying seabed until target depth.

In an aspect of the invention, the container floor comprises a floor aperture for receiving the downwards extending protrusion.

Forming a floor aperture in the container floor is advantageous in that the downwards extending protrusion embedded in the ballast material hereby can penetrate the floor aperture and the underlying seabed to better secure the foundation against lateral displacement.

In an aspect of the invention, the downwards extending protrusion is formed as a tubular part with an outer diameter of between 1 and 5 meters.

Forming the downwards extending protrusion with a too large diameter makes it more difficult to penetrate the seabed by self-weight as a larger diameter provides for a larger surface area and thereby larger skin friction with the seabed soil. It would be difficult to provide for ramming or other kind of installation means so self-weight penetration is critical. But forming the protrusion with a too small diameter might not provide for enough structural support. Thus, above range provides an advantageous balance between structural strength and installation feasibility.

In an aspect of the invention, the ballast material in each of the three or more ballast containers is formed as at least two coherent blocks substantially extending from the floor to the container opening.

Forming the ballast material in each of the three or more ballast containers as two or more coherent blocks each substantially extending the entire inner height of the ballast containers is advantageous in that the ballast material in each ballast container is very heavy and by dividing the ballast material for each ballast container into two or more coherent blocks, the ballast material is easier to handle thereby reducing cost to shipment, crane capacity requirements etc.

In an aspect of the invention, the offshore wind turbine foundation further comprises expansion means arranged in each of the three or more ballast containers for pressing the at least two coherent blocks outwards against the at least one sidewall.

Providing expansion means for pressing the coherent blocks outwards against the at least one sidewall is advantageous in that this will bring the blocks and the sidewalls of the container into contact thereby increasing the stiffness of the container to reduce the strain on the sidewalls which gives rise to stresses and possibly failure.

In this context the term "expansion means" should be understood as any kind of expander suited for pressing the coherent blocks outwards against the sidewall(s) of a ballast container. I.e., the term includes any kind of wedge, jack, expanding mortar or grout, expansion bolts, or similar or any combination thereof.

In an aspect of the invention, the at least one sidewall of the three or more ballast containers comprises a reinforcing part at the container opening increasing the stiffness of the at least one sidewall at the container opening.

The sidewall(s) are connected to the floor at the bottom and the risk of the sidewall(s) deforming will increase towards the opening at the top of the ballast container. It is therefore advantageous to provide the ballast containers with a reinforcing part at the container opening to increase the stiffness of the sidewall at the container opening where it is the weakest.

In this context the term "reinforcing part" should be understood as any kind of reinforcer suited for increasing the stiffness of a sidewall of a ballast container at an upper container opening. I.e., the term includes any kind of collar, increased sidewall thickness, cross brace, stiffening plate/rib, or similar or any combination thereof either formed integrally with the sidewall or formed as a separated part connected to or surrounding the sidewall(s).

In an aspect of the invention, an underside of the container floor comprises one or more downwards extending protrusions.

The offshore wind turbine foundation according to the present invention is designed to rest on the seabed. However, this could lead to the foundation sliding across the seabed when subject to strong shear forces from current, wind and/or waves. It is therefore advantageous to provide the underside of the container floor with one or more downwards extending protrusions - such as spikes, bulges, blocks, bands, one or more piles or other - to increase the friction between the offshore wind turbine foundation and the seabed and thereby reduce the risk of the foundation sliding.

If the offshore wind turbine foundation according to the invention is to be placed on a seabed where the rock seabed is covered by a relatively thin uppermost layer (for instance a so-called "filter layer" or "armour layer") which is relatively soft (e.g. softer than rock), there is a risk that the soil will collapse in a combined sliding and bearing soil failure mechanism due to the combined shear forces and vertical load from the self-weight of the foundation. Furthermore, in such seabed conditions, the soil would allow some penetration by the protrusions due to the self-weight of the foundation and the softness of the upper layer, and it is therefore advantageous to provide the offshore wind turbine foundation with above-mentioned protrusions in that the protrusions would both increase the friction (as mentioned above) but also increase the soil stability and thereby reduce the risk of soil collapse.

More specifically, the protrusions penetrating the soil would alter the soil pressure zone such that a larger part of the soil in the pressure zone is supported by the foundation weight such that the soil is kept more compact and thereby increase the lateral support on the pile which in turn increases the stability of the foundation.

It should be mentioned that the softer, uppermost layer could already be present at the seabed, or it could be as part of seabed preparation prior to installation.

In an aspect of the invention, the protrusions are formed as piles with a length of between 1 and 10 meters and a diameter of between 1 and 5 meters. If the pile is too long it may hit the hard rock layer and therefore not achieve target penetration depth, and if the pile is too short, it may not provide adequate support. If the pile diameter is too small, it may not provide enough pile support and if the pile diameter is too large, it may be difficult to ensure self-penetration or material consumption is not optimized. Thus, above-mentioned ranges represent an optimal balance between functionality and material usage.

In an aspect of the invention, the at least one sidewall is circular.

Forming the sidewall of the ballast containers circular is advantageous in that this will optimise material usage while providing a stiff structure as regards buckling and/or wall deformations

In an aspect of the invention, the inside diameter of the at least one sidewall is substantially constant.

Forming the sidewall circular with a substantially constant inside diameter means that the ballast containers will be cylindrical which is advantageous in relation to simplifying manufacturing.

In an aspect of the invention, the inside diameter is between 10% and 120%, preferably between 25% and 90% and most preferred between 40% and 70% of the inside height of the at least one sidewall.

If the inside diameter of the ballast containers is too big in relation to the inside height of the sidewall(s) it becomes too difficult and costly to ensure sufficient stiffness so that the ballast container does not bend or deform if the ballast container is lifted/pulled upwards at the side connected to the lattice structure due to an overturning moment in the foundation. However, if the inside diameter of the ballast containers is too little in relation to the inside height of the sidewall(s) the risk of the high sidewall(s) buckling or deforming if the ballast container is lifted/pulled upwards at the side connected to the lattice structure is increased, and a high and relatively thin ballast container will also move more of the ballast upwards instead of outwards which is unfavourable in relation to countering overturning moments. Furthermore, if the inside diameter is too big in relation to the inside height of the sidewall(s), there is a less favourable load transfer from the lattice structure to the soil. Essentially, an unproportionally large sized inside diameter makes it difficult to distribute the load from the lattice structure evenly onto the underlying seabed via the ballast container bottom floor, as the pressure on the soil may be too concentrated at the connection area between lattice structure and bottom floor, i.e. high soil contact pressure close to the connection area and low soil contact pressure away from the connection area, which may increase the risk of lack of sufficient soil bearing capacity.

Thus, the present relationships between diameter and height of the ballast containers are advantageous in relation to function and cost. Even further, the present relationships between diameter and height of the ballast containers are also advantageous in relation to material use in relation to volume.

In an aspect of the invention, the three or more ballast containers are substantially identical.

Forming the ballast containers substantially identical is advantageous in that it will simplify logistic and production, and it will simplify production and handling of the ballast material.

In an aspect of the invention, at least one of the three or more ballast containers has a larger inside volume than the other ballast containers of the three or more ballast containers.

Making one of the ballast containers bigger than the other enables that more ballast material can be placed in this container which is advantageous if the offshore wind turbine foundation is predominantly affected by loads from a specific direction - i.e., waves, current, wind or other primarily hitting the structure from a specific direction - in that the bigger container can be oriented into this predominant load direction to enable that the offshore wind turbine foundation can handle a larger overturning moment in this direction and with more optimized material distribution.

In an aspect of the invention, the floor of each of the three or more ballast containers is substantially parallel with a connection surface holding the connection means of the connection interface, and wherein the at least one sidewall is protruding substantially perpendicular to the floor.

Making the sidewall(s) substantially perpendicular to the floor which in turn is substantially parallel with the connection surface of the connection interface is advantageous in that the sidewall(s) hereby is substantially vertical and it is thereby possible to better use the entire volume of the ballast containers for particularly coherent ballast material without making the sidewall(s) carry any of the weight of the ballast material, in which case the ballast material may impose a bending moment on the floor while it is desirable that the floor only carries a vertical load.

In an aspect of the invention, the lattice structure comprises a jacket foundation having at least three corner posts extending between the connection interface and the floor, wherein each of the three or more ballast containers are each connected to a corner post of the at least three corner posts and wherein transverse braces are interconnecting neighbouring corner posts of the at least three corner posts.

A jacket foundation is a well proven offshore wind turbine foundation having a great strength in relation to the relatively little surface that can be affected by loads such as current and waves. Furthermore, the corner posts are the strongest and stiffest structural members of a jacket foundation, and it is therefore advantageous to connect the ballast containers to the corner posts.

In an aspect of the invention, the lattice structure comprises a tripod foundation having a centre pile, wherein each of the three or more ballast containers are connected to the centre pile by means of two or more vertically displaced transverse braces.

A tripod foundation is very cost-efficient in relation to manufacturing and can be used even in deep waters. A tripod foundation would allow the use of monopile supply chain and is a relatively simple lattice structure comprising few connections and therefore requires few weldings, few weld inspections, few fatigue critical areas etc. Furthermore, connecting the ballast containers to the centre pile by means of two or more vertically displaced transverse braces is advantageous in that it creates a strong and stiff structure capable of transferring great loads without deforming or bending.

The invention further provides for a method for installing an offshore wind turbine foundation on a seabed. The method comprises the steps of,
- manufacturing an offshore wind turbine foundation so that it comprises,
   ∘ a connection interface arranged at the top of the offshore wind turbine foundation, wherein the connection interface comprises connection means arranged for connecting a wind turbine tower or a transition piece to the offshore wind turbine foundation,
   ∘ three or more ballast containers arranged at the bottom of the offshore wind turbine foundation, wherein each of the three or more ballast containers comprises a floor and at least one sidewall protruding in the direction of the connection interface from the floor so that a container opening is formed at the top end of the at least one sidewall,
   ∘ a lattice structure interconnecting the three or more ballast containers and the connection interface, wherein the three or more ballast containers are arranged outside a horizontal outer perimeter of the lattice structure,
- transporting the offshore wind turbine foundation to an erection site,
- placing the offshore wind turbine foundation on a seabed at the erection site so that the offshore wind turbine foundation is resting on the seabed, and
- lowering ballast material down into each of the three or more ballast containers through the container openings.

Manufacturing the offshore wind turbine foundation so that the ballast containers are arranged outside an outer perimeter of the lattice structure is advantageous in that the ballast hereby is moved further away from the centre of the foundation. And manufacturing the ballast containers so that the inside of the ballast containers is easily accessible through the container opening in the top of the ballast containers is advantageous in that heavier ballast material hereby can easily be lowered down into the ballast containers after offshore wind turbine foundation has been transported to and erected correctly at the erection site. This is furthermore advantageous in that the heavy ballast material hereby can be transported and handled separate from the foundation making it easier to transport, handle and erect the foundation while still ensuring that very dense material can be used as ballast material to reduce manufacturing cost and installation time, and increase functionality.

In an aspect of the invention, the method further comprises the step of levelling out the areas of the seabed on which the offshore wind turbine foundation is going to rest, before placing the offshore wind turbine foundation on the seabed.

Levelling out the relevant parts of the seabed - e.g., by removing seabed material or adding material to the seabed - before placing the offshore wind turbine foundation on the seabed is advantageous in that this simplifies correct installation of the foundation.

In an aspect of the invention, the ballast material in each of the three or more ballast containers is formed as at least two coherent blocks arranged to substantially extend from the floor to the container opening and wherein the method comprises placing one of the at least two coherent blocks at a time in each of the three or more ballast containers.

Forming the ballast material in each of the three or more ballast containers as two or more coherent blocks each substantially extending the entire inner height of the ballast containers and then installing them one by one in the ballast containers is advantageous in that the ballast material in each ballast container is very heavy and by dividing the ballast material for each ballast container into two or more coherent blocks the ballast material is easier to handle thereby reducing cost to shipment, crane capacity etc.

In an aspect of the invention, the offshore wind turbine foundation is an offshore wind turbine foundation according to any of the previously discussed offshore wind turbine foundations.

Hereby is achieved an advantageous embodiment of the invention.

### Figures

The invention will be described in the following with reference to the figures in which,
- fig. 1: illustrates a large modern offshore wind turbine placed on an offshore wind turbine foundation, as seen from the front,
- fig. 2: illustrates an offshore wind turbine foundation comprising a jacket foundation, as seen in an isometric view,
- fig. 3: illustrates a vertical cross section cutout through the middle of a ballast container, as seen from the front,
- fig. 4: illustrates a horizontal cross section cutout through a ballast container, as seen from the top,
- fig. 5: illustrates an offshore wind turbine foundation comprising a tripod foundation, as seen in an isometric view, and
- fig. 6: illustrates a vertical cross section cutout through the middle of a ballast container holding two stacked blocks of ballast material, as seen from the front.

### Detailed description of related art

Fig. 1 illustrates a large modern offshore wind turbine 1 as known in the art placed on top of and connected to an offshore wind turbine foundation 6 according to the present invention. In this embodiment the wind turbine 1 comprises a wind turbine nacelle 3 positioned on top of wind turbine tower part 7. A wind turbine rotor 4 - in this case comprising three wind turbine blades 5 - is mounted on a common hub which is connected to the nacelle 3 through a shaft extending out of the nacelle 3 front. In another embodiment the wind turbine rotor 4 could comprise another number of blades 5 such as one, two, four, five or more. Also, the offshore wind turbine 1 could comprise several rotors, also known as multi-rotor wind turbines.

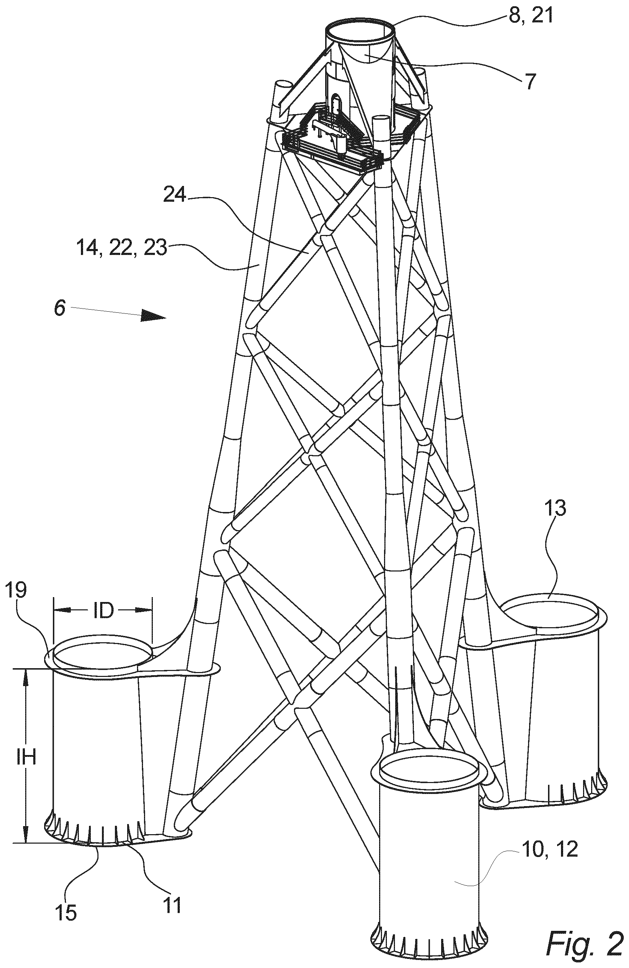

In this embodiment the wind turbine 1 is placed on top of a transition piece 9 which in turn is placed on top of a gravity-based offshore wind turbine foundation 6 which will be discussed in more details in the following. A gravity-based foundation 6 is a support structure held in place by gravity and in this embodiment the foundation 6 comprises a lattice structure 14 including a more or less traditional jacket foundation 22, wherein the top of each of the corner posts 23 in this embodiment are provided with a connection interface 7 in the form of connection flanges having an upwards facing connection surface 21 holding connection means 8 in the form of through holes (not visible in fig. 1), so that the transition piece 9 in this case is connected to the top of the offshore wind turbine foundation 6. Each of the connection flanges is in this embodiment substantially similar to the connection flange at the top of the transition piece-like part disclosed in fig. 2 but in another embodiment the connection interface 7 could also or instead comprise plates, rods, tubes or other. In another embodiment the connection interface 7 could include one big flange connected to all the corner posts 23.

In this embodiment the offshore wind turbine foundation 6 also comprises ballast containers 10 arranged at the bottom of the offshore wind turbine foundation 6, wherein the ballast containers 10 are each connected to a corner post 23 of the jacket foundation 22 so that an underside 15 of the floor 11 of each ballast container 10 forms the lowermost face of the offshore wind turbine foundation 6 to make the underside 15 of each ballast container 10 rest on the seabed 27 during normal use of the foundation 6. However, in another embodiment the underside 15 of the ballast containers 10 would be lifted from the seabed 27 - i.e., placed higher up on the corner posts 23 - so that the foundation 6 would be reasting on the seabed 27 by means of dedicated bottom flanges or other. In yet another embodiment, the underside 15 of the ballast containers 10 could be below the lower-most surface of the corner posts, i.e. placed lower than the corner-posts, such that the axial load from the corner post is transferred to the ballast container floor 15 mainly as a bending moment. This is advantageous in that the ballast bottom surface 15 may distribute the load onto the soil more evenly (rather than in a concentrated area around the corner post) and therefore may reduce risk of soil collapse or lack of sufficient soil bearing capacity which could result in excessive tilting of the foundation such that the verticality tolerance is exceeded or that the foundation is not safe to operate.

In this embodiment the ballast containers 10 are fully open at the top to enable easy access to the inside of the ballast containers 10 and in this embodiment the ballast containers 10 are arranged outside an outer perimeter of the lattice structure 14 so that the ballast containers 10 are freely accessible from above and so that the ballast containers are located furthest away possible from the horizontal centre of the foundation to better counter overturning moments due to the relatively long "moment arm" (i.e. the perpendicular distance from the centre of the moment to the line of action of the force).

In this embodiment the pre-manufactured offshore wind turbine foundation 6 is installed on the seabed 27 by first levelling out the areas of the seabed 27 on which the foundation 6 is going to rest. In this embodiment this is done by removing a little of the seabed 27 in the relevant places but in another embodiment the levelling out could include adding material to the relevant parts of the seabed 27, placing tiles or the like on the seabed 27, casting one or more bases on the seabed 27 or other or any combination thereof. In another embodiment, the seabed preparation could comprise arranging an armour layer suitable for carrying the loads from the structure. Or in another embodiment the levelling out of the seabed 27 is not initially performed - e.g., if the seabed 27 is sufficient level, if the offshore wind turbine foundation 6 comprised self-levelling means or if the contact areas of the foundation 6 was manufactured at different hights corresponding to the level differences at the specific erection site.

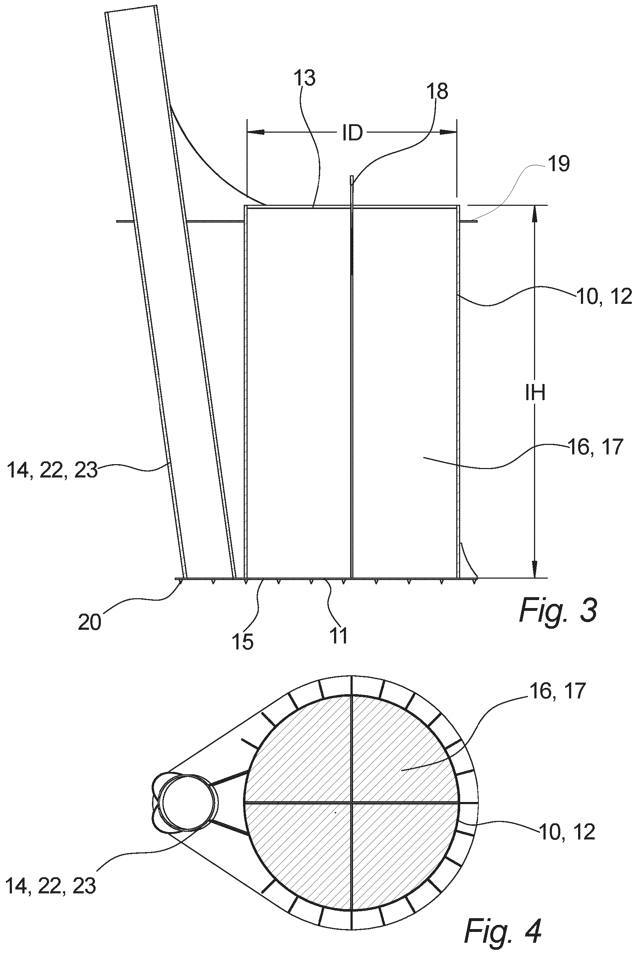

The pre-manufactured offshore wind turbine foundation 6 is transported to the erection site, and then the foundation 6 is placed 6 on the seabed 27 so that in this case the floor 11 of the ballast containers 10 is resting on the seabed 27. Once the foundation 6 is correctly placed on the seabed 27 ballast material (see figs. 3 and 4) is lowered down into each of ballast containers 10 through the container openings 13 in the top of each ballast containers 10. In this embodiment each ballast containers 10 holds four blocks 17 (see figs. 3 and 4) of ballast material 16 and in this embodiment, these blocks 17 are placed one by one in each of the ballast containers 10. However, in another embodiment all the ballast containers 10 for each ballast container 10 could be placed in one lift. In an embodiment, the ballast is comprised of one block, two blocks or any number of suitable divisions.

Fig. 2 illustrates an offshore wind turbine foundation 6 comprising a jacket foundation 22, as seen in an isometric view.

In this embodiment the lattice structure 14 comprises a jacket foundation 22 having three corner posts 23 extending between the connection interface 7 and the floor 11 of the ballast containers 10, and in this embodiment transverse braces 24 are interconnecting neighbouring corner posts 23. However, in another embodiment the jacket foundation 22 could comprise another number of corner posts 23 - such as four, six, nine or even more - or the lattice structure 14 could be formed without corner posts 23 or the lattice structure 14 could be formed in a multitude of other ways including some kind of framework of interconnected bars, beams, struts, braces, posts or other.

In this embodiment the connection interface 7 includes a transition part formed integrally with the lattice structure 14 in that the transition part is welded to the jacket foundation 22 and in this embodiment the connection interface 7 comprises a connection flange - at the top of the transition part - having an upwards facing connection surface 21 holding connection means 8 in the form of through holes corresponding to through holes in a matching connection flange at the bottom of a tower 2, so that a wind turbine tower 2 in this case can be connected to the connection interface 7 by means of bolts (not shown) extending through the through holes in the connection flanges of the tower 2 and the foundation 6.

In this embodiment the three ballast containers 10 are each connected to a corner post 23 by means of plates welded to the corner posts 23 and to the ballast containers 10 to form a strong and stiff connection reducing the risk of unwanted bending or deformation when/if the corner posts 23 are subject loads. However, in another embodiment the ballast containers 10 could also or instead be connected to the transverse braces 24 or to another part of the lattice structure 14 - if the lattice structure 14 does not comprise a jacket foundation 22. In another embodiment the ballast containers 10 could also or instead be connected to the lattice structure 14 by means of connection means such as bolts, screws, rivets, interlocking geometry or other.

In this embodiment each of the ballast containers 10 comprises a floor 11 and single circular sidewall 12 connected to the floor 11 and protruding in the general direction of the connection interface 7, so that a container opening 13 is formed across the entire top face of the ballast containers 10 at the top end of the sidewall 12. In this embodiment the circular sidewall 12 has a substantially constant inside diameter ID so that the ballast containers 10 are formed as cylindrical barrels that are open at the top. However, in another embodiment the inside diameter ID of one or more of the ballast containers 10 could be varying in the vertical extent of the containers 10 and/or one or more of the ballast containers 10 could also or instead comprise another shape such as oval, rectangular, polygonal or other. In another embodiment the sidewall 12 could comprise openings to reduce material use.

In this embodiment all the ballast containers 10 are substantially identical and connected to the lattice structure 14 in the same way. However, in another embodiment one or more of the ballast containers 10 could be connected differently to the lattice structure 14 that the other ballast containers 10 and/or at least one of the ballast containers 10 could be formed with a larger inside volume than the other ballast containers 10.

In this embodiment the inside diameter ID of the ballast containers 10 is 10 meters and the inside height IH of the ballast containers 10 is 20 meters - i.e., in this embodiment the inside diameter ID of the ballast containers 10 is around 50% of the inside height IH. However, in another embodiment the inside diameter ID proportion in relation to the inside height could be greater- such as 60%, 100%, 150% or even more of the inside height IH. Or the inside diameter ID proportion in relation to the inside height IH could be smaller- such as 45%, 35%, 25% or even less of the inside height IH - e.g., depending on the specific foundation design, the specific use, the specific ballast material, supply chain capabilities, transportation capabilities, manufacturing capabilities or other.

In this embodiment the sidewall 12 of the ballast containers 10 comprises a reinforcing part 19 located at the container opening 13 to increase the stiffness of the sidewall 12 at the container opening 13. In this embodiment the reinforcing part 19 is formed as a single plate part welded to the ballast containers 10 at the container opening 13 and also extending around the lattice structure 14 where the plate part is also connected by means of welding. However, in another embodiment the sidewall 12 of the ballast containers 10 could comprise more than one reinforcing part 19 - e.g., vertically displaced on the sidewall 12 - and/or the reinforcing part 19 could be connected to the sidewall 12 by means of connection means such as bolts, screws, rivets, interlocking geometry or other, or the reinforcing part 19 could be clamping the sidewall 12. In an embodiment, the ballast container 10 could comprise reinforcing part 19 extending in a vertical direction, and such vertical stiffeners could be distributed around the circumference. Such stiffeners 19 could be connected to the bottom plate 11. In another embodiment the reinforcing part 19 could also or instead comprise tubes, pipes, bands, bars, I-profile, H-profile or other.

Fig. 3 illustrates a vertical cross section cutout through the middle of a ballast container 10, as seen from the front and fig. 4 illustrates a horizontal cross section cutout through a ballast container 10, as seen from the top.

In this embodiment the floor 11 of the ballast containers 10 is substantially parallel with the connection surface 21 of the connection interface 7 and the sidewall 12 of the ballast containers 10 is protruding vertically upwards substantially perpendicular to the floor 11 - as seen in fig. 1 and 2. However, in another embodiment the floor 11 would not be parallel with the connection surface 21 - e.g., if the foundation 6 is placed on a sloping seabed - and/or the sidewall 12 or sidewalls 12 would not be protruding vertically upwards substantially perpendicular to the floor 11 - e.g., it the ballast containers 10 were provided with varying diameter in the vertical direction.

In this embodiment ballast material 16, in the form of four coherent concrete blocks 17, is located inside the ballast container 10. However, in another embodiment each ballast container 10 could hold fewer blocks 17 such as three, two or one, or each ballast container 10 could hold more blocks 17 such as six, ten, sixteen or even more depending on the size of the foundation 6, the specific conditions at the erection site, the type of ballast material or other. And/or ballast material 16 could also or instead comprise metal, rocks, resin containing gravel, high-density concrete or other. In this embodiment all the blocks are substantially extending from floor 11 and up to the container opening 13. However, in another embodiment the ballast material 16 could extend up and out of the container opening 13 or the blocks 17 could be stacked vertically. In an embodiment, the container opening 13 may comprise a mesh or sieve with suitably sized holes placed after installation to protect the ballast material 16 from scouring, i.e. from being sucked out of the ballast container due to currents and/or waves.

As seen in fig. 3 the offshore wind turbine foundation 6 does in this embodiment further comprise expansion means 18 arranged for pressing the blocks 17 outwards against the sidewall 12. In this embodiment the expansion means 18 are formed as wedges driven vertically down between the blocks 17 at the top so that the blocks 17 are pushed outwards against the sidewall 12. However, in another embodiment the expansion means 18 could be formed integrally with the blocks 17 and/or the ballast containers 10 and/or the expansion means 18 could also or instead include an expanding material - such as expanding concrete, a bolt and nut arrangement driving the blocks apart, or the expansion means 18 could be formed in numerous other ways known to the skilled person.

As seen in fig. 3 the underside 15 of the container floor 11 does in this embodiment further comprise downwards extending protrusions 20 in the form of spikes to increase the friction between the offshore wind turbine foundation 6 and the seabed 27. A coefficient of friction between the offshore wind turbine foundation 6 and the seabed 27 should preferably be above 0.3 and for some seabed types this could be achieved by providing the underside 15 of the container floor 11 with downwards extending protrusions 20. However, in another embodiment the downwards extending protrusions 20 could also or instead comprise bars, tubes, surface undulations or other.

In this embodiment, the protrusions 20 are formed as spikes. However, in another embodiment, the protrusions could be formed as piles, plates, rods or other.

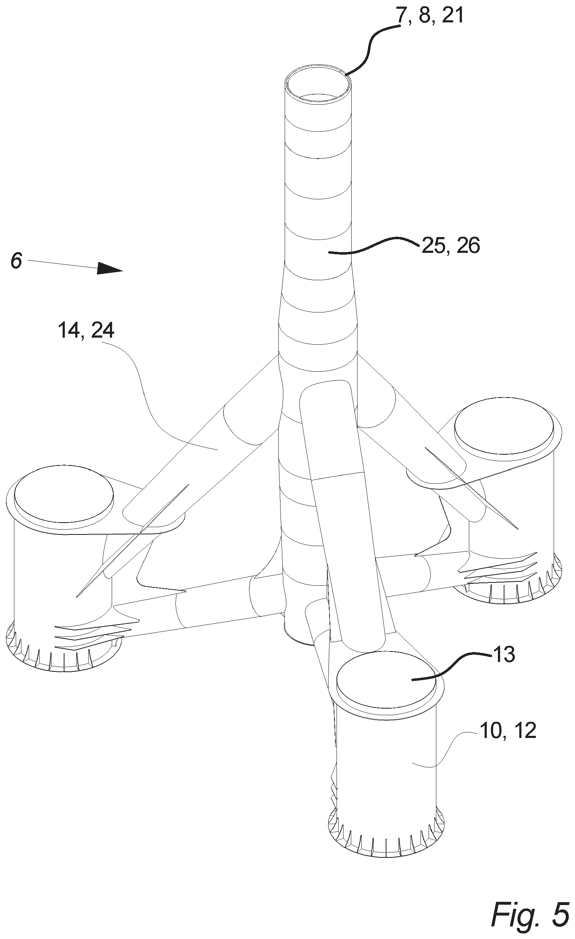

Fig. 5 illustrates an offshore wind turbine foundation 6 comprising a tripod foundation 25, as seen in an isometric view.

In this embodiment the lattice structure 14 comprises a tripod foundation 25 having a centre pile 26 formed at a vertical circular tube, wherein each of the ballast containers 10 are connected to the centre pile 26 by means of two vertically displaced transverse braces 24. However, in another embodiment the tripod foundation 25 could comprise more transverse braces 24 and/or the centre pile 26 could be formed differently - such as triangular, square, as a frame structure, or other.

In this embodiment the transverse braces 24 are welded to the ballast containers 10 and the centre pile 26 but in another embodiment one or both of these connections could also or instead be made by connection means as previously discussed.

In the embodiment disclosed in all the figs. 1, 2, 3 and 5 a part of the lattice structure 14 is extending in between the vertical extent of the ballast containers 10 to ensure a stiff and rigid structure. However, in another embodiment the lattice structure 14 could be connected to the ballast containers 10 at the top of the ballast containers 10 so that the lattice structure 14 is not extending in between the ballast containers 10.

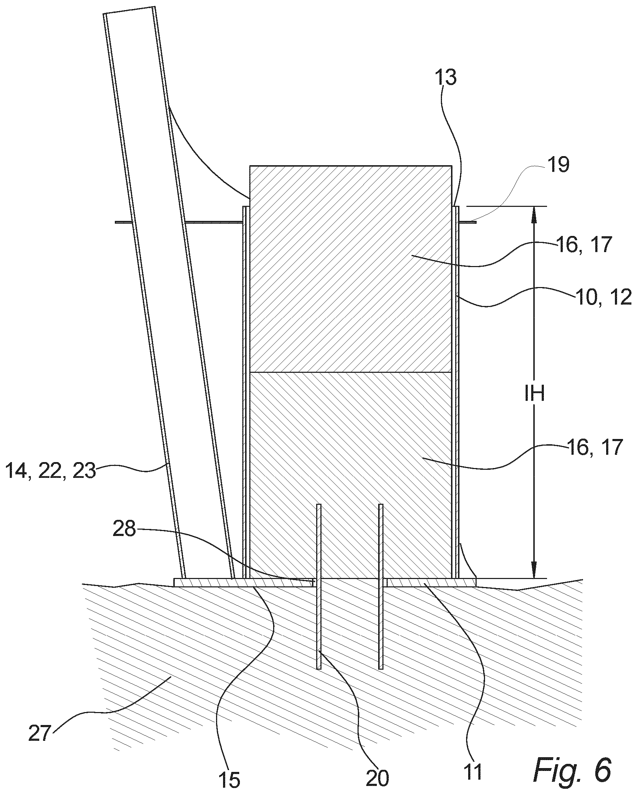

Fig. 6 illustrates a vertical cross section cutout through the middle of a ballast container 10 holding two vertically stacked blocks 17 of ballast material 16, as seen from the front.

In this embodiment, the downwards extending protrusion 20 is provided in the ballast material 16 in that in this embodiment the protrusion 20 is formed as a tubular part in the form of a pipe being embedded in a bottom part of the bottom block 17 of the two vertically stacked blocks 17 of ballast material 16. When the ballast material 16 is placed in a ballast container 10, the downwards extending protrusion 20 embedded in the ballast material 16 of the bottom block 17 will pass through a floor aperture 28 in the container floor 11 arranged for receiving the downwards extending protrusion 20 so that the downwards extending protrusion 20 may penetrate the underlying seabed 27. The outer dimensions of the floor aperture 28 is in this embodiment larger than the outer dimension of the downwards extending protrusion 20. Thus, in this embodiment the downwards extending protrusion 20 is provided in the ballast container 10 together with the ballast material 16. However, in another embodiment the protrusion 20 could also or instead be formed as bar, a rod, a plate or other, the protrusion 20 could be embedded in more than one vertically adjacent blocks 17, the bottom block 17 could comprise more than one protrusion 20, the container floor 11 could comprise more than one floor aperture 28 or any combination thereof.

In this embodiment the ballast material 16 is extending out of the container opening 13 at the top of the ballast container 10. This is advantageous in that it hereby is possible to increase the size and thereby the weight of the ballast material 16 without increasing the size of the ballast material 16.

It should be noted that the underlying seabed 27 could be material that is provided on the seabed 27 to prepare it for supporting the foundation 6 (e.g. a layer provided for levelling out the seabed 27) or it could be a small layer of sand, clay, gravel or type of seabed soil which is present on top of e.g. the rocky layer being difficult to penetrate.

When the ballast material 16 is placed in the ballast container 10 the downwards extending protrusion will then reach target depth when the ballast material 16 makes contact with the container floor 11 and thereby provide support and stability for the foundation 6 by resting on the container floor 11.

Embedding the downwards extending protrusion 20 in the ballast material 16 could be performed by e.g. casting the protrusion 20 directly in the ballast material 16, or it could be received in the ballast material 16 and locked in place by locking means. The locking means could be locking pins, hooks, wedges, annular collars mechanically interlocking with the ballasting material 16 or any other type of locking means for supporting the downwards extending protrusion 20 in the ballast material 16.

The invention has been exemplified above with reference to specific examples of lattice structures 14, ballast material 16, ballast container 10 and other. However, it should be understood that the invention is not limited to the particular examples described above but may be designed and altered in a multitude of varieties within the scope of the invention as specified in the claims.

### List

- 1.: Wind turbine
- 2.: Tower
- 3.: Nacelle
- 4.: Rotor
- 5.: Blade
- 6.: Offshore wind turbine foundation
- 7.: Connection interface
- 8.: Connection means
- 9.: Transition piece
- 10.: Ballast container
- 11.: Floor
- 12.: Sidewall
- 13.: Container opening
- 14.: Lattice structure
- 15.: Underside of floor
- 16.: Ballast material
- 17.: Block
- 18.: Expansion means
- 19.: Reinforcing part
- 20.: Protrusion
- 21.: Connection surface
- 22.: Jacket foundation
- 23.: Corner post
- 24.: Brace
- 25.: Tripod foundation
- 26.: Centre pile
- 27.: Seabed
- 28.: Floor aperture
- ID.: Inside diameter of sidewall
- IH.: Inside height of sidewall

## Claims

1. An offshore wind turbine foundation (6) comprising,
a connection interface (7) arranged at the top of said offshore wind turbine foundation (6), wherein said connection interface (7) comprises connection means (8) arranged for connecting a wind turbine tower (2) or a transition piece (9) to said offshore wind turbine foundation (6),
three or more ballast containers (10) arranged at the bottom of said offshore wind turbine foundation (6), wherein each of said three or more ballast containers (10) comprises a floor (11) and at least one sidewall (12) protruding in the direction of said connection interface (7) from said floor (11), so that a container opening (13) is formed at the top end of said at least one sidewall (12),
ballast material (16) arranged in each of said three or more ballast containers (10), and
a lattice structure (14) interconnecting said three or more ballast containers (10) and said connection interface (7), wherein said three or more ballast containers (10) are arranged outside a horizontal outer perimeter of said lattice structure (14).

2. An offshore wind turbine foundation (6) according to claim 1 or 2, wherein an underside (15) of said floor (11) forms the lowermost face of said offshore wind turbine foundation (6), so that said offshore wind turbine foundation (6) is resting on said floor (11) during normal use of said offshore wind turbine foundation (6).

3. An offshore wind turbine foundation (6) according to any of the preceding claims, wherein said ballast material (16) in each of said three or more ballast containers (10) is formed as one or more coherent blocks (17) substantially extending from said floor (11) to said container opening (13).

4. An offshore wind turbine foundation (6) according to any of the preceding claims, wherein said ballast material (16) in each of said three or more ballast containers (10) is formed as at least two coherent blocks (17) substantially extending from said floor (11) to said container opening (13).

5. An offshore wind turbine foundation (6) according to any of the preceding claims, wherein said ballast material (16) is formed as one or more coherent blocks (17) and wherein at least one of said one or more coherent blocks (17) comprises a downwards extending protrusion (20).

6. An offshore wind turbine foundation (6) according to claim 5, wherein said container floor (11) comprises a floor aperture (28) for receiving said downwards extending protrusion (20).

7. An offshore wind turbine foundation (6) according to claim 3 or 5, wherein said offshore wind turbine foundation (6) further comprises expansion means (18) arranged in each of said three or more ballast containers (10) for pressing said at least two coherent blocks (17) outwards against said at least one sidewall (12).

8. An offshore wind turbine foundation (6) according to any of the preceding claims, wherein said least one sidewall (12) of said three or more ballast containers (10) comprises a reinforcing part (19) at said container opening (13) increasing the stiffness of said least one sidewall (12) at said container opening (13).

9. An offshore wind turbine foundation (6) according to any of the preceding claims, wherein an underside (15) of said container floor (11) comprises one or more downwards extending protrusions (20).

10. An offshore wind turbine foundation (6) according to any of the preceding claims, wherein said at least one sidewall (12) is circular, wherein the inside diameter (ID) of said at least one sidewall (12) is substantially constant, and wherein said inside diameter (ID) is between 10% and 120%, preferably between 25% and 90% and most preferred between 40% and 70% of the inside height (IH) of said at least one sidewall (12).

11. An offshore wind turbine foundation (6) according to any of the preceding claims, wherein said floor (11) of each of said three or more ballast containers (10) is substantially parallel with a connection surface (21) holding said connection means (8) of said connection interface (7), and wherein said at least one sidewall (12) is protruding substantially perpendicular to said floor (11).

12. An offshore wind turbine foundation (6) according to any of the preceding claims, wherein said lattice structure (14) comprises a jacket foundation (22) having at least three corner posts (23) extending between said connection interface (7) and said floor (11), wherein each of said three or more ballast containers (10) are each connected to a corner post (23) of said at least three corner posts (23) and wherein transverse braces (24) are interconnecting neighbouring corner posts (23) of said at least three corner posts (23).

13. A method for installing an offshore wind turbine foundation (6) on a seabed (27), said method comprising the steps of,
• manufacturing an offshore wind turbine foundation (6) so that it comprises,
∘ a connection interface (7) arranged at the top of said offshore wind turbine foundation (6), wherein said connection interface (7) comprises connection means (8) arranged for connecting a wind turbine tower (2) or a transition piece (9) to said offshore wind turbine foundation (6),
∘ three or more ballast containers (10) arranged at the bottom of said offshore wind turbine foundation (6), wherein each of said three or more ballast containers (10) comprises a floor (11) and at least one sidewall (12) protruding in the direction of said connection interface (7) from said floor (11) so that a container opening (13) is formed at the top end of said at least one sidewall (12),
∘ a lattice structure (14) interconnecting said three or more ballast containers (10) and said connection interface (7), wherein said three or more ballast containers (10) are arranged outside a horizontal outer perimeter of said lattice structure (14),
• transporting said offshore wind turbine foundation (6) to an erection site,
• placing said offshore wind turbine foundation (6) on said seabed (27) at said erection site so that said offshore wind turbine foundation (6) is resting on said seabed (27), and
• lowering ballast material (16) down into each of said three or more ballast containers (10) through said container openings (13).

14. A method according to claim 13, wherein said method further comprises the step of levelling out the areas of said seabed (27) on which said offshore wind turbine foundation (6) is going to rest, before placing said offshore wind turbine foundation (6) on said seabed (27).

15. A method according to claim 13 or 14, wherein said ballast material (16) in each of said three or more ballast containers (10) is formed as at least two coherent blocks (17) arranged to substantially extend from said floor (11) to said container opening (13) and wherein said method comprises placing one of said as at least two coherent blocks (17) at a time in each of said three or more ballast containers (10).
